# FASCICULE DE BREVET EUROPEEN

(11) **EP 2 492 435 B1**
(45) Date de publication et mention de la délivrance du brevet: **10.02.2016**
(21) Numéro de dépôt: 12156747.3
(22) Date de dépôt: 23.02.2012
(51) Int. Cl.: E06B 11/02, E06B 3/964, E06B 3/70, F16B 7/04

(54) **Ossature en kit pour vantail fixe, pivotant ou coulissant pour portail ou analogue**
Skelett in einem Bausatz für feststehende, schwenkbare oder schiebbare Tür- oder Fensterflügel oder Ähnliches
Frame in form of a kit for a fixed, hinged or sliding leaf for a gate or similar

(30) Priorité: 24.02.2011 FR 1100557
(43) Date de publication de la demande: 29.08.2012
(73) Titulaire: GP Production, 89140 Pont Sur Yonne (FR)
(72) Inventeur: Piou, Guillaume, 89190 Chigy (FR)
(74) Mandataire: Oudin, Stéphane

(56) Documents cités:
- WO-A1-2008/000019
- US-A1- 2008 277 640
- US-A1- 2009 200 532

## Description

### Domaine technique

La présente invention concerne une ossature en kit facile et rapide à mettre en oeuvre, ne nécessitant pas d'outillage particulier ni de formation préalable et destinée notamment à réaliser un vantail fixe, pivotant ou coulissant pour un portail ou analogue. La présente invention concerne également le procédé d'assemblage de ladite ossature.

### Technique antérieure

On sait que, pour fabriquer notamment un vantail de portail par exemple en alliage d'aluminium, on utilise classiquement une ossature comprenant au moins deux montants, une traverse inférieure, une traverse supérieure, le cas échéant, une traverse intermédiaire et des lames de remplissage jointives ou espacées. Pour réaliser ledit vantail, les différents éléments sont assemblés soit par soudage soit par vissage-boulonnage.

Dans le premier cas, il est nécessaire de faire des soudures fermées au droit de chaque assemblage de deux éléments afin d'éviter des problèmes de corrosion et notamment de traces blanches dues principalement à l'oxydation de l'aluminium, lesdites soudures fermées sont couteuses et doivent être réalisées par du personnel qualifié. En outre, l'opération de laquage doit être effectuée après l'assemblage desdits éléments entre eux rendant ladite opération de laquage plus délicate à réaliser compte tenu de l'encombrement du vantail et des difficultés d'accès à certaines zones.

Dans le deuxième cas, un élément sur deux comporte, sur une de ses faces, une ouverture usinée apte à permettre l'insertion partielle d'un élément adjacent dans ledit élément et sur la face opposée un logement muni d'au moins un orifice apte à coopérer avec un organe de fixation, de type vis par exemple, pour solidariser les deux éléments adjacents entre eux. Ce type d'assemblage nécessite, d'une part, des opérations d'usinage coûteuses sur deux faces opposées de certains éléments et, d'autre part, de réaliser l'opération de laquage après l'assemblage afin de ne pas détériorer ledit laquage lors notamment de l'insertion des éléments dans l'ouverture des éléments adjacents. Pour les mêmes raisons que précédemment, le laquage est donc délicat et le problème des traces blanches reste entier. En effet, de manière classique, il n'y a pas d'étanchéité autour des ouvertures et évidemment pas de laque sur les extrémités des éléments insérées dans lesdites ouvertures, lesdites extrémités peuvent donc s'oxyder et des traces blanches peuvent donc apparaître. De plus, les usinages nécessitent des outillages de précision particuliers et du personnel préalablement formé.

Par ailleurs, pour fabriquer un vantail de portail par exemple de forme globalement trapézoïdale, il faut qu'au moins une traverse (de manière générale la traverse supérieure) soit inclinée et comporte donc à chacune de ses extrémités des découpes en biais. Lesdites découpes doivent être réalisées avec précision afin que l'ajustement de ladite traverse supérieure avec les montants soit le plus parfait possible. De plus, on comprend bien que l'assemblage de traverses avec des découpes en biais au moyen de vis n'est pas très efficace car les taraudages sont réalisés généralement avant les découpes en biais et ont un axe longitudinal parallèle à l'axe longitudinal desdites traverses alors que le plan d'appui des têtes de vis n'est pas perpendiculaire audit axe longitudinal desdites traverses.

En outre, une fois réalisées, les traverses munies de découpes en biais ne sont valables que pour une seule forme de trapèze et ne peuvent, en aucun cas, être utilisées pour réaliser un vantail de portail de forme globalement carrée ou rectangulaire par exemple.

Enfin, ces deux types d'assemblages connus nécessitent un montage en usine et un emballage pour le transport plus volumineux renchérissant le prix de revient du vantail.

Document WO 2008/000019 Al divulgue une ossature destinée notamment à réaliser un vantail fixe ou pivotant ou coulissant pour un portail ou analogue, ladite ossature comprenant au moins quatre éléments reliés entre eux, au moins deux desdits au moins quatre éléments comportant un organe d'ancrage orientable à au moins une de leurs extrémités pour les orienter angulairement et les immobiliser par rapport aux éléments avec lesquels ils sont liés à la position et selon l'orientation angulaire choisies.

### Exposé de l'invention

Le but de la présente invention est donc de pallier les inconvénients précédemment cités et de proposer une ossature en kit économique, facile et rapide à mettre en oeuvre, ne nécessitant pas d'outillage particulier ni de formation préalable et destinée notamment à réaliser un vantail fixe, pivotant ou coulissant pour un portail ou analogue. En outre, cette ossature est solide et limite significativement l'apparition de traces blanches.

Conformément à l'invention, il est donc proposé une ossature comme définie dans la revendication 1.

Selon un mode de réalisation préférentiel, l'organe d'ancrage comprend un embout solidaire d'au moins une des extrémités desdits éléments, une platine apte à coopérer avec ledit embout afin d'orienter angulairement ladite platine (92) par rapport audit embout (91), et au moins un organe de blocage apte à coopérer avec l'embout et la platine pour immobiliser cette dernière sur ledit embout dans une orientation choisie.

Selon un mode de réalisation préféré, la platine pivote par rapport audit embout autour d'un axe sensiblement perpendiculaire à l'axe longitudinal respectifs desdits éléments associés.

Avantageusement, l'embout comporte du coté opposé aux éléments une surface convexe de contact avec au moins une partie de la platine.

De manière préférée, la platine est telle que les extrémités des éléments recevant un organe d'ancrage ont alors une double section longitudinale en forme générale de T. Ladite platine comprend avantageusement une partie médiane et deux parties d'extrémité disposées de part et d'autre de ladite partie médiane, ladite partie médiane comporte une surface concave apte à coopérer avec la surface convexe de l'embout et une surface convexe, chacune desdites surfaces étant déterminées par un rayon de courbure distinct.

De manière avantageuse, les surfaces concave et convexe de la partie médiane la surface convexe de l'embout ont une forme de portion de cylindre de révolution et ont le même rayon de courbure.

Selon un mode de réalisation avantageux, lesdits quatre éléments sont un premier montant, un second montant, une traverse inférieure, et une traverse supérieure, en ce que les premiers et second montants comportent au moins une rainure interne débouchant longitudinalement aux extrémités des premiers et second montants et débouchant transversalement à l'extérieur desdits premier et second montants par une ouverture de largeur inférieure, lesdits premiers et second montants étant orientés de sorte que leur ouverture respective soit en vis-à-vis, et en ce que les extrémités desdites traverses inférieure et supérieure reçoivent chacune un organe d'ancrage permettant l'insertion simultanée desdites extrémités dans la rainure interne et les ouvertures, le coulissement sans jeu excessif desdites extrémités le long de l'axe longitudinal respectif des premier et second montants tout en bloquant le déplacement relatif desdites extrémités par rapport aux premier et second montants suivant deux directions perpendiculaires à l'axe longitudinal respectif des premier et second montants.

Avantageusement, les premier et second montants ont une section transversale en forme générale de C, chacune comportant respectivement une âme et deux ailes, ces dernières formant respectivement et conjointement, d'une part, ladite rainure interne avec ladite âme et, d'autre part, ladite ouverture.

De manière préférée, les traverses inférieure et supérieure comportent respectivement une barre dont les extrémités sont apte à coopérer avec l'ouverture respective desdits premier et second montants, chaque barre ayant une section transversale en forme générale de C et comportant respectivement une âme et deux ailes, lesdites âme et ailes formant respectivement et conjointement un logement débouchant transversalement et aux extrémités à l'extérieur desdites barres et muni d'une butée, lesdites traverses inférieure et supérieure étant orientées de sorte que les logements respectifs de leur barres soient en vis-à-vis.

Avantageusement, l'ossature en kit comporte au moins un élément réducteur apte à être encliqueté dans les espaces libres des ouvertures desdits premiers et second montants et comprenant une gorge dont la largeur est sensiblement identique à celle des logements respectifs des traverses inférieure et supérieure.

De manière préférée, l'ossature en kit comporte des premières lames de remplissage jointives et/ou des deuxièmes lames de remplissage non jointives aptes à venir s'insérer dans les logements respectifs des traverses inférieure et supérieure et/ou dans la gorge de l'élément réducteur.

Selon un mode de réalisation avantageux, l'ossature en kit comporte une traverse intermédiaire similaire auxdites traverses inférieure et supérieure, disposée entre ces dernières et comportant donc une barre comprenant, sur chacune de ses extrémités longitudinales un organe d'ancrage, de préférence identique aux organes d'ancrage (9) respectifs des traverses inférieure et supérieure (4, 6).

Avantageusement, la barre a une section transversale en forme générale de H et comporte une âme centrale et deux ailes dépassant de part et d'autre de ladite âme, les deux ailes formant conjointement un premier et un second logements longitudinaux disposés de part et d'autre de ladite âme et débouchant transversalement et aux extrémités à l'extérieur traverse intermédiaire, lesdits premier et second logements étant muni d'une butée et de préférence identiques aux logements respectifs desdites traverses inférieure et supérieure.

De manière préférée, l'ossature en kit comporte au moins un élément espaceur apte à être encliqueté dans les espaces libres dans les logements respectifs des traverses inférieure et supérieure ou dans les premier et deuxième logements de la traverse intermédiaire ou dans la gorge de l'élément réducteur.

Selon une variante de réalisation, l'organe d'ancrage comporte une platine agencée pour coopérer avec la face d'une des extrémités desdits éléments, et au moins un organe de blocage agencé pour coopérer avec la platine et un organe de réception de ladite extrémité desdits éléments pour fixer ladite platine sur ladite face, ladite face étant préalablement découpée afin d'obtenir l'orientation angulaire souhaitée entre lesdits éléments et la platine.

Avantageusement, la platine est telle que les extrémités des éléments recevant un organe d'ancrage ont alors une double section longitudinale en forme générale de T. De préférence, la platine est globalement en forme de parallélépipède aplati et comprend au moins un orifice muni d'un lamage à portée sphérique.

De manière avantageuse, la platine comprend deux séries d'une pluralité d'ensembles orifice-lamage disposés les uns à la suite des autres selon un axe parallèle à l'axe longitudinal de ladite platine, les deux séries étant parallèles entre elles.

Selon un mode de réalisation avantageux, les organes de blocage et de réception sont chacun de préférence au nombre de deux et sont respectivement de préférence une vis à portée sphérique et un taraudage.

### Description sommaire des figures

D'autres avantages et caractéristiques ressortiront mieux de la description qui va suivre d'une variante d'exécution d'une ossature en kit selon l'invention en référence aux figures annexées sur lesquelles :
- la figure 1 est une vue en perspective d'une ossature en kit conforme à l'invention après assemblage ;
- la figure 2 est une vue en coupe horizontale de l'ossature en kit suivant l'axe II-II' de la figure 1,
- la figure 3 est une vue en coupe horizontale de l'ossature en kit suivant l'axe III-III' de la figure 1,
- la figure 4 est une vue en coupe verticale de l'ossature en kit suivant l'axe IV-IV' de la figure 1,
- la figure 5 est une vue en coupe verticale de l'ossature en kit suivant l'axe V-V' de la figure 1,
- les figures 6A et 6B sont des vues de détail éclatée avant assemblage et après assemblage de l'extrémité d'une traverse de l'ossature en kit de la figure 1 munie d'une première variante d'un organe d'ancrage ;
- les figures 7A et 7B sont deux vues de détail illustrant le montage de la traverse de la figure 6B sur un montant de l'ossature en kit de la figure 1 ;
- les figures 8A et 8B sont deux vues de détail montrant la fixation de la traverse sur le montant de la figure 6B ;
- la figure 9 est une vue de détail éclatée avant assemblage d'une deuxième variante de l'ossature en kit selon l'invention, plus particulièrement de l'extrémité d'une de ses traverses munie d'un organe d'ancrage ;
- la figure 10 est une vue en perspective d'une troisième variante de l'ossature en kit conforme à l'invention ;
- les figures 11A et 11B sont des vues de détail éclatée avant assemblage et après assemblage d'une traverse de l'ossature en kit de la figure 1 munie d'une quatrième variante d'un organe d'ancrage ;
- la figure 12 est une vue de détail illustrant le montage de la traverse de la figure 11B sur un montant de l'ossature en kit de la figure 1.

### Meilleure manière de réaliser l'invention technique

Dans la description ci-après, on décrit une ossature en kit selon l'invention pour réaliser un vantail pivotant de portail de forme globalement rectangulaire et comportant au moins quatre éléments, à savoir deux montants, une traverse inférieure, une traverse supérieure. L'ossature en kit peut également comporter une traverse intermédiaire et des lames de remplissage jointives ou espacées disposées verticalement, par exemple, de part et d'autre de ladite traverse intermédiaire. Il va de soi que cette ossature en kit pourra avoir une toute autre forme telle que carrée ou trapézoïdale sans sortir du cadre de la présente invention. De même ladite ossature en kit pourra ne comporter que les traverses inférieure et supérieure, ou que des lames de remplissage jointives ou que des lames de remplissage espacées, ou encore que des traverses inférieure, intermédiaire et supérieure et aucune lame de remplissage sans sortir du cadre de la présente invention. De même, les traverses inférieure et supérieure pourront ne pas être rectiligne afin d'avoir une ossature en forme courbe ou de chapeau de gendarme par exemple, sans sortir du cadre de la présente invention. Enfin ladite ossature en kit pourra être utilisée pour réaliser un vantail pour portillon ou portail coulissant ou pour réaliser une barrière sans sortir du cadre de la présente invention.

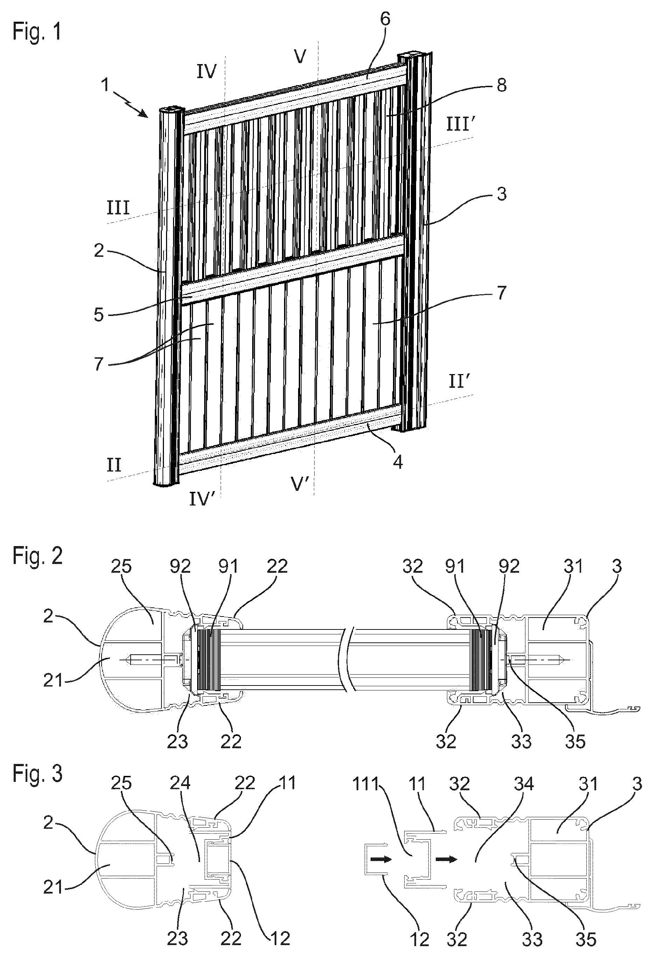

En référence à la figure 1, l'ossature en kit 1 selon l'invention comporte un premier montant 2 sensiblement vertical, un second montant 3 sensiblement vertical, une traverse inférieure 4, une traverse intermédiaire 5 et une traverse supérieure 6, lesdites traverses inférieure, intermédiaire et supérieure 4, 5, 6 étant de préférence horizontales et reliant les premiers et second montants 2, 3 respectivement au voisinage de l'extrémité inférieure, du milieu et de l'extrémité supérieure desdits premiers et second montants 2, 3. L'ossature en kit 1 comporte en outre avantageusement des premières lames de remplissage 7 de préférence jointives joignant les traverses inférieure et intermédiaire 4, 5, et des deuxièmes lames de remplissage 8 avantageusement espacées joignant les traverses intermédiaire et supérieure 5, 6.

Les premier et second montants 2, 3, les traverses inférieure, intermédiaire et supérieure 4, 5, 6 et les premières et deuxièmes lames de remplissage 7, 8 sont de préférence réalisés au moins en partie à partir de profilés extrudés en alliage léger de type aluminium par exemple. Pour des raisons évidentes de résistance mécanique, lesdits profilés extrudés sont avantageusement cloisonnés et comportent un certain nombre de nervures, renforts et autres raidisseurs pour garantir la bonne tenue mécanique desdits profilés.

Toutefois, on comprend bien que les différents éléments constituant l'ossature en kit 1 selon l'invention pourront être réalisés dans d'autres matériaux tels que par exemple du bois, de l'acier inoxydable, des matières plastiques de type polychlorure de vinyle ou des matières composite sans sortir du cadre de la présente invention.

En référence aux figures 2 et 3, les premier et second montants 2, 3 ont de préférence une section transversale en forme générale de C, chacune comportant respectivement une âme 21, 31 et deux ailes 22, 32. Les deux ailes 22, 32 sont telles qu'elles forment respectivement et conjointement avec ladite âme 21, 31 une rainure interne 23, 33 débouchant longitudinalement à chaque extrémité desdits premier et second montants 2, 3 et débouchant transversalement à l'extérieur desdits premier et second montants 2, 3 par une ouverture 24, 34 de largeur inférieure.

Toutefois, les premier et second montants 2, 3 pourront également avoir une section transversale en forme générale de H, sans sortir du cadre de la présente invention. Ainsi, chacun des premier et second montants 2, 3 comporteront alors respectivement deux rainures internes 23, 33 disposées de part et d'autre de leur âme 21, 31 respective, les deux rainures internes 23, 33 débouchant notamment transversalement à l'extérieur desdits premier et second montants 2, 3 respectivement par une ouverture 24, 34 de largeur inférieure.

Lors de l'assemblage de l'ossature en kit 1, les premier et second montants 2, 3 sont orientés de sorte qu'au moins une de leurs rainures internes 23, 33 et en particulier au moins une de leurs ouvertures 24, 34 respective soit en vis-à-vis.

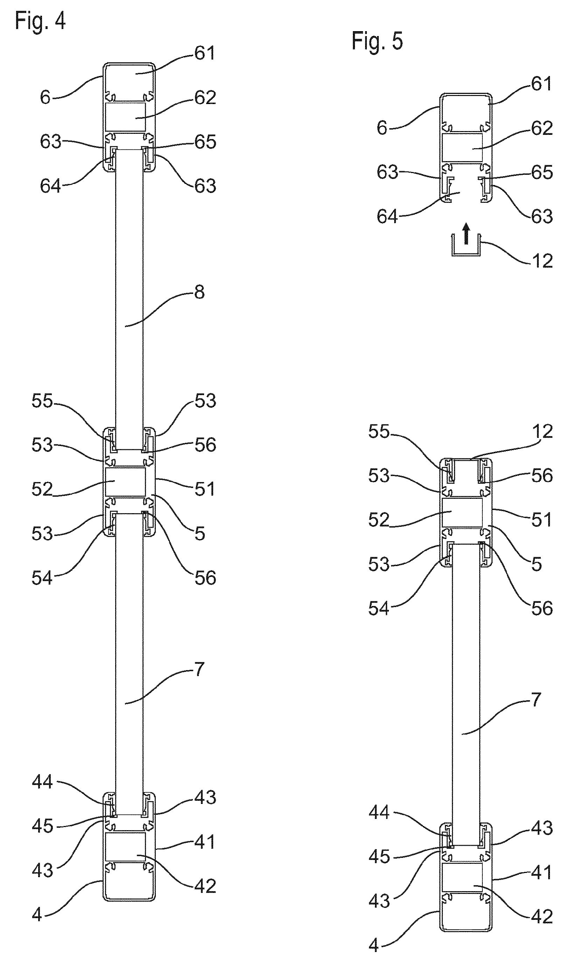

En référence aux figures 4 et 5, les traverses inférieure et supérieure 4, 6 comportent respectivement une barre 41, 61 ayant également une section transversale en forme générale de C, chacune comportant respectivement une âme 42, 62 et deux ailes 43, 63. Les deux ailes 43, 63 sont telles qu'elles forment respectivement et conjointement un logement 44, 64 longitudinal débouchant transversalement et aux extrémités à l'extérieur desdites barres 41, 61, ledit logement 44, 64 est muni d'une butée 45, 65 avantageusement formée par des rebords s'étendant sensiblement perpendiculairement auxdites ailes 43, 63 en direction de l'intérieur desdites barres 41, 61. Les traverses inférieure et supérieure 4, 6 sont ainsi sensiblement identiques entre elles.

Lors de l'assemblage de l'ossature en kit 1, les traverses inférieure et supérieure 4, 6 sont orientées de sorte que le logement 44, 64 respectif de leur barres 41, 61 soient en vis-à-vis.

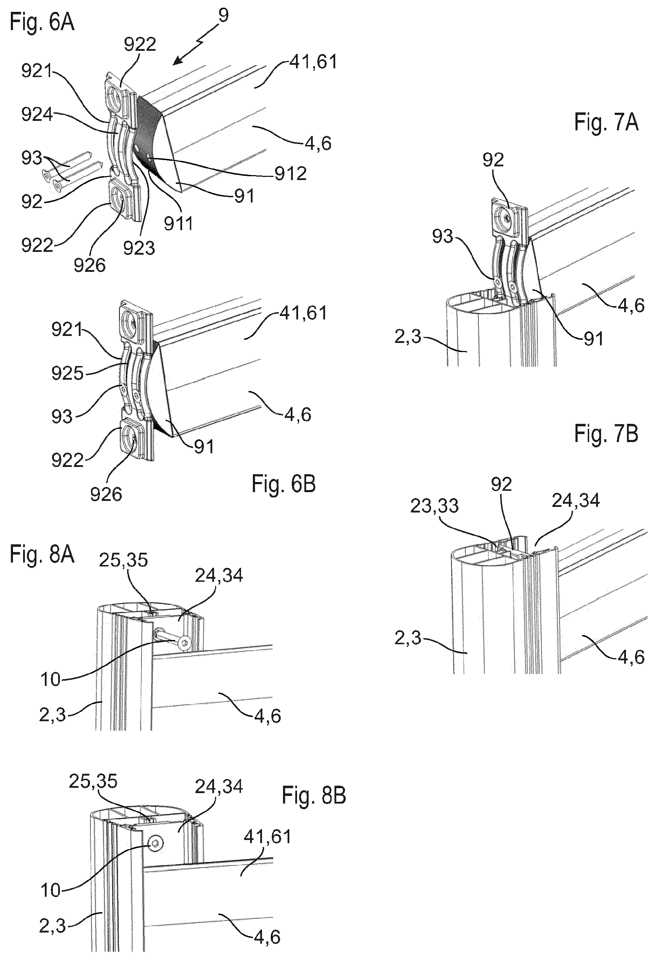

En référence aux figures 6A et 6B, les traverses inférieure et supérieure 4, 6 comportent en outre, sur chacune de leurs extrémités, respectivement un organe d'ancrage 9 orientable. Chaque organe d'ancrage 9 comprend un embout 91 solidaire d'une des extrémités desdites traverses inférieure et supérieure 4, 6, une platine 92 apte à coopérer avec ledit embout 91 afin d'orienter angulairement ladite platine 92 par rapport audit embout 91, et au moins un organe de blocage 93 apte à coopérer avec l'embout 91 et la platine 92 pour immobiliser cette dernière sur ledit embout 91 dans une orientation choisie.

De préférence, ladite platine 92 pivote par rapport audit embout 91 autour d'un axe sensiblement perpendiculaire à l'axe longitudinal respectif des traverses inférieure et supérieure 4, 6.

Un embout 91 est fixé à chacune des extrémités des traverses inférieure et supérieure 4, 6 par tout moyen approprié tel que, par exemple, le collage, le vissage ou encore le soudage. Par ailleurs, on comprend bien que lesdits embouts 91 et traverses inférieure et supérieure 4, 6 pourront être issus de matière, sans sortir de cadre de la présente invention.

En outre, l'embout 91 comporte du coté opposé aux traverses inférieure et supérieure 4, 6 une surface convexe 911 de contact avec au moins une partie de la platine 92 pour permettre le pivotement de cette dernière par rapport audit embout 91 et donc par rapport aux traverses inférieure et supérieure 4, 6. La surface convexe 911 a avantageusement une forme de portion de cylindre de révolution.

La platine 92 est globalement en forme de parallélépipède aplati et comprend une partie médiane 921 et deux parties d'extrémité 922 disposées de part et d'autre de ladite partie médiane 921.

Les dimensions de la platine 92 et de ses parties médiane et d'extrémité 921, 922 sont telles que :
- ses hauteur et largeur hors-tout de la platine 92 sont supérieures aux dimensions de la section transversale des barres 41, 61,
- les largeur et épaisseur de chacune des parties d'extrémité 922 sont inférieures aux dimensions de la section transversale de la rainure interne 23, 33 des premier et second montants 2, 3,

- la largeur de chacune des parties d'extrémité 922 est supérieure à la largeur de celle de l'ouverture 24, 34 desdits premier et second montants 2, 3,
- la largeur de chacune des parties d'extrémité 922 est avantageusement supérieure à celle de la partie médiane 921.

Ainsi, les platines 92 dépassent transversalement des barres 41, 61 et les extrémités des traverses inférieure et supérieure 4, 6 ont alors une double section longitudinale en forme générale de T.

On désigne ici par double section longitudinale les deux sections longitudinales principales respectivement selon deux plans longitudinaux des traverses inférieure et supérieure 4, 6, l'un étant perpendiculaire et l'autre parallèle aux ailes 43, 63 desdites barres 41, 61.

La partie médiane 921 comporte une surface concave 923 apte à coopérer avec la surface convexe 911 de l'embout 91 et une surface convexe 924, chacune desdites surfaces étant déterminées par un rayon de courbure distinct. Avantageusement, les surfaces concave et convexe 923, 924 ont une forme de portion de cylindre de révolution. Encore plus avantageusement, les rayons de courbure des surfaces concave et convexe 923, 924 de la partie médiane 921 sont identiques et égaux à celui de la surface convexe 911 de l'embout 91.

La partie médiane 921 comporte en outre au moins une rainure 925, de préférence deux, débouchant d'un coté sur la surface concave 923 et d'autre coté sur la surface convexe 924.

L'organe d'ancrage 9 orientable comporte également au moins un organe de blocage 93 apte à coopérer avec une des rainures 925 de la zone médiane 921 et au moins un organe de réception 912 de l'embout 91 pour immobiliser la platine 92 sur l'embout 91 dans une position choisie.

Les organes de réception 912 et de blocage 93 sont chacun de préférence au nombre de deux et sont respectivement des taraudages et des vis. On comprend bien que ces organes pourront être remplacés par tout autre moyen que procurant les mêmes effets techniques tels que par exemple le rivetage, le soudage ou encore le collage, sans sortir du cadre de la présente invention.

De même, on comprend bien qu'en desserrant les organes de blocage 93, on peut déplacer la platine 92 le long des rainures 925 en appui sur la surface convexe 911 de l'embout 91 et ainsi faire pivoter ladite platine 92 afin de régler son orientation et notamment l'angle entre l'axe longitudinal respectif des traverses inférieure et supérieure 4, 6 et l'axe longitudinal de la platine 92 passant par les centres de ses parties d'extrémité 922.

Ainsi, on comprend bien tout l'intérêt, notamment économique, de cet organe d'ancrage 9 orientable. En effet, un seul modèle d'organe d'ancrage 9 permet d'obtenir de nombreuses formes d'ossature en kit 1 et permet de utiliser, le cas échéant, les traverses inférieure et supérieure 4, 6 pour d'autre configuration que celle initialement prévue.

En référence aux figures 2, 7A et 7B, l'un des organes d'ancrage 9 des traverses inférieure et supérieure 4, 6 est apte à coopérer avec la rainure interne 23 du premier montant 2 et l'autre organe d'ancrage 9 est apte à coopérer avec la rainure interne 33 du second montants 3 pour permettre d'insérer chaque extrémité desdites traverses inférieure et supérieure 4, 6 respectivement dans lesdits premier et second montants 2, 3.

En référence aux figures 6A, 6B, 8A et 8B, chaque platine 92 des organes d'ancrage 9 comporte en outre au moins un orifice 926 aménagé sur l'une de ses parties d'extrémité 922 et débouchant dans la rainure interne 23, 33 et étant accessible par l'ouverture 24, 34 respective des premier et second montants 2, 3, lorsque les traverses inférieure et supérieure 4, 6 sont assemblées et insérées sur les dits premier et second montants 2, 3. Par conséquent, la position de l'orifice 926 est telle que ledit orifice 926 reste accessible même lorsque lesdites traverses inférieure et supérieure 4, 6 sont assemblées et insérées sur les dits premier et second montants 2, 3. De préférence, chaque platine 92 comporte un orifice 926 aménagé sensiblement au milieu de chacune de ses parties d'extrémité 922, lesdits orifices 926 étant alors disposés de part et d'autre des barres 41, 61.

De même, en référence aux figures 2, 6A à 8B, on comprend bien que l'ouverture 24, 34 respective des premier et second montants 2, 3 est apte à permettre le passage desdites barres 41, 61. Ainsi, l'insertion simultanée d'au moins une partie des organes d'ancrage 9 dans la rainure interne 23, 33 et des barres 41, 61 dans les ouvertures 24, 34 garantit une bonne tenue mécanique de l'assemblage de l'ossature en kit 1.

L'Homme du Métier n'aura aucune difficulté à dimensionner les ouvertures 24, 34 et les rainures internes 23, 33 des premier et second montants 2, 3, les organes d'ancrage 9 et les barres 41, 61 pour permettre un coulissement sans jeux excessif des extrémités des traverses inférieure et supérieure 4, 6 le long de l'axe longitudinal respectif des premier et second montants 2, 3.

On désigne ici par jeu excessif un jeu dimensionnel n'excédant pas 1 mm.

On comprend bien que la double section longitudinale des extrémités desdites traverses inférieure et supérieure 4, 6 en forme globale de T permet, d'une part, d'autoriser le coulissement des extrémités des traverses inférieure et supérieure 4, 6 le long de l'axe longitudinal respectif des premier et second montants 2, 3 dans au moins leur ouverture 24, 34 respective tout en bloquant le déplacement relatif desdites extrémités par rapport aux premier et second montants 2, 3 dans les rainures internes 23, 33 suivant deux directions perpendiculaires audit axe longitudinal et, d'autre part, de laisser accessible au moins un orifice 926 de la platine 92.

En référence aux figures 8A et 8B, pour fixer lesdites traverses inférieure et supérieure 4, 6 et donc bloquer leur coulissement le long des premier et second montants 2, 3, l'ossature en kit 1 comporte des organes de blocage 10 apte à coopérer simultanément avec au moins un orifice 926 des platines 92 et au moins un organe de réception 25, 35 respectif des premier et second montants 2, 3. Les organes de réception 25, 35 sont respectivement disposés dans l'âme 21, 31 des premier et second montants 2, 3 entre les deux ailes 22, 32.

Les organes de réception 25, 35 et de blocage 10 sont de préférence au nombre de deux et respectivement des taraudages et des vis. On comprend bien que ces organes de réception 25, 35 pourront être remplacés par tout autre moyen autre procurant les mêmes effets techniques tels que par exemple le rivetage, le soudage ou encore le collage, sans sortir du cadre de la présente invention.

En référence aux figures 1, 4 et 5, l'ossature en kit 1 selon l'invention comporte en outre une traverse intermédiaire 5 disposée entre les traverses inférieure et supérieure 4, 6 et reliant les premiers et second montants 2, 3. Cette traverse intermédiaire 5 est similaire auxdites traverses inférieure et supérieure 4, 6 et comporte donc une barre 51 pourvue, sur chacune de ses extrémités, d'un organe d'ancrage, non représenté, avantageusement identique aux organes d'ancrage 9 précédemment décrits. Cette traverse intermédiaire 5 est assemblée sur les premiers et second montants 2, 3 de la même façon que les traverses inférieure et supérieure 4, 6.

Toutefois, la barre 51 de ladite traverse intermédiaire 5 a une section transversale en forme générale de H et comporte une âme 52 centrale et deux ailes 53 dépassant de part et d'autre de ladite âme 52. Les deux ailes 53 sont telles qu'elles forment conjointement un premier et un second logements 54, 55 longitudinaux disposés de part et d'autre de ladite âme 52 et débouchant transversalement et aux extrémités à l'extérieur traverse intermédiaire 5, lesdits premier et second logements 54, 55 sont munis d'une butée 56 avantageusement formée par des rebords s'étendant sensiblement perpendiculairement auxdites ailes 53 en direction de l'intérieur de ladite barre 51. Les premier et second logements 54, 55 sont de préférence identiques aux logements 44, 64 respectifs desdites traverses inférieure et supérieure 4, 6.

En référence aux figures 1, 4 et 5, l'ossature en kit 1 selon l'invention comporte également des premières lames de remplissage 7 de préférence jointives joignant les traverses inférieure et intermédiaire 4, 5, et des deuxièmes lames de remplissage 8 avantageusement espacées joignant les traverses intermédiaire et supérieure 5, 6.

Ainsi, pour monter une première lame de remplissage 7, on insère l'un de ses extrémités dans l'logement 44 de la traverse inférieure 4 jusqu'à venir en appui sur la butée 45, puis on insère l'autre extrémité dans le second logement 55 de la traverse intermédiaire 5 jusqu'à venir en appui sur la butée 56. Pour les premières lames de remplissage 7 suivantes on procède de même en prenant soin de mettre en contact les premières lames de remplissage 7 adjacentes.

Pour obtenir un remplissage continu de la zone située entre les traverses inférieure et intermédiaire 4, 5 et les premier et second montants 2, 3, il est nécessaire de parfaire l'assemblage entre les premières lames de remplissage 7 et lesdits premier et second montants 2, 3. Or, on comprend bien que les ouvertures 24, 34 respectives desdits premier et second montants 2, 3 sont plus larges que le logement 44 et le second logement 55 respectifs des traverses inférieure et intermédiaire 4, 5. Il est donc nécessaire de mettre en place, de préférence par encliquetage, dans lesdites ouvertures 24, 34 un élément réducteur 11 (représenté sur la figure 3), suivant la flèche de la figure 3. Cet élément réducteur 11 comporte une gorge 111 dont la largeur est identique à celle de l'logement 44 et du second logement 55 respectifs des traverses inférieure et intermédiaire 4, 5 et apte à recevoir une première lame de remplissage 7.

On procède de façon analogue pour monter une deuxième lame de remplissage 8 de préférence non jointives. Ainsi, on insère l'un de ses extrémités dans le premier logement 54 de la traverse intermédiaire 5 jusqu'à venir en appui sur la butée 55, puis on insère l'autre extrémité dans le logement 64 de la traverse supérieure 6 jusqu'à venir en appui sur la butée 65. Pour les deuxièmes lames de remplissage 8 suivantes, on procède de même on prenant soin de ne pas mettre en contact les deuxièmes lames de remplissage 8 adjacentes.

Pour garantir l'espace entre deux deuxièmes lames de remplissage 8 adjacentes, conformément à la figure 5, on met en place, de préférence par encliquetage, suivant la flèche de la figure 5 dans le premier logement 54 de la traverse intermédiaire 5 et dans le logement 64 de la traverse supérieure 6 un élément espaceur 12 ayant une section transversale en forme générale de U.

Par ailleurs, pour des raisons esthétiques, pour combler la partie des ouvertures 24, 34 respectifs desdits premier et second montants 2, 3 située entre les traverses intermédiaire et supérieure 5, 6, on pourra encliqueter successivement un élément réducteur 11 et un élément espaceur 12 conformément à la figure 3.

L'Homme du Métier n'aura aucune difficulté à dimensionner les premières et deuxièmes lames de remplissage 7, 8 pour permettre une insertion sans jeux excessif de leurs extrémités dans les logements 44, 64 respectifs des traverses inférieure et supérieure 4, 6, dans les premier et second logements 54, 55 de la traverse intermédiaire 5 et la gorge 111 de l'élément réducteur 11.

On comprend bien qu'avec une telle configuration, l'ossature en kit 1 selon l'invention n'implique que des opérations simples pour sa fabrication ne nécessitant pas de machines complexes. En effet, les seules opérations à prévoir sont du tronçonnage à longueur de profilés, du perçage et du taraudage. De plus, le laquage pourra être réalisé avant assemblage, car lors de l'assemblage, il n'y a pas de risque de détérioration dudit laquage. De ce fait, le laquage pourra être réalisé sur quasiment toutes les surfaces, limitant significativement l'apparition de traces blanches. En outre, on comprend bien que l'assemblage de ladite ossature en kit 1 est particulièrement rapide et simple et qu'il ne nécessite ni outillage particulier ni de formation préalable. Enfin, l'ossature en kit 1 pourra donc être livrée non assemblée chez le client réduisant son coût de fabrication et le coût de transport.

Selon, l'utilisation de l'ossature en kit 1, elle pourra être munie de différents équipements non représentés tels que par exemple des axes de rotation, des serrures, des dispositifs de motorisation, des dispositifs de tapée ou de fixation ou encore de dispositifs de roulement.

En référence aux figures 1 à 8, la présente invention a également pour objet le procédé d'assemblage d'une ossature en kit 1 comportant au moins une pluralité d'étapes à savoir :
- mise en place d'un organe d'ancrage 9 à chaque extrémité de la traverse inférieure 4 et réglage de l'orientation des platines 92 desdits organes d'ancrage 9 ;
- insertion d'une des extrémités de la traverse inférieure 4 simultanément dans l'ouverture 24 et la rainure interne 23 du premier montant 2 ;
- immobilisation de ladite extrémité sur le premier montant 2 ;
- mise en place d'un organe d'ancrage 9 à chaque extrémité de la traverse supérieure 6 et réglage de l'orientation des platines 92 desdits organes d'ancrage 9 ;
- insertion d'une des extrémités de la traverse supérieure 6 simultanément dans l'ouverture 24 et la rainure interne 23 du premier montant 2 ;
- immobilisation de ladite extrémité sur le premier montant 2 ;
- insertion successive des extrémités libres des traverses inférieure et supérieure 4, 6 simultanément dans l'ouverture 34 et la rainure interne 33 du deuxième montant 3 ;
- immobilisation desdites extrémités libres sur le deuxième montant 3.

On comprend que ces étapes peuvent ne pas être exécutées dans l'ordre indiqué. Par exemple, l'insertion et la fixation de l'extrémité libre de la traverse inférieure 4 sur le deuxième montant 3 peuvent être réalisées après la fixation de la première extrémité de ladite traverse inférieure 4 sur le premier montant 2.

L'étape de fixation desdites extrémités libres des traverses inférieure et supérieure 4, 6 pourra être précédée d'une étape d'encliquetage d'un élément réducteur 11 dans les espaces libres des ouvertures 24, 34 respectifs des premier et deuxième montants 2, 3 entre lesdites traverses inférieure et supérieure 4, 6.

L'étape d'insertion successive des extrémités libres des traverses inférieure et supérieure 4, 6 pourra être précédée d'une étape d'insertion des premières lames de remplissage 7 jointives et/ou des deuxièmes lames de remplissage 8 non jointives.

L'étape d'insertion d'une des extrémités de la traverse supérieure 6 dans le premier montant 2 pourra être précédée d'une étape d'insertion et une étape de fixation d'une des extrémités de la traverse intermédiaire 5 dans le premier montant 2.

L'étape de fixation desdites extrémités libres des traverses inférieure, intermédiaire et supérieure 4, 5, 6 pourra être suivie le cas échéant d'une étape d'encliquetage d'un élément espaceur 12 dans les espaces libres dans les logements 44, 64 respectifs des traverses inférieure et supérieure 4, 6, dans les premier et second logements 54, 55 de la traverse intermédiaire 5 et la gorge 111 de l'élément réducteur 11.

### Description d'autres modes de réalisation

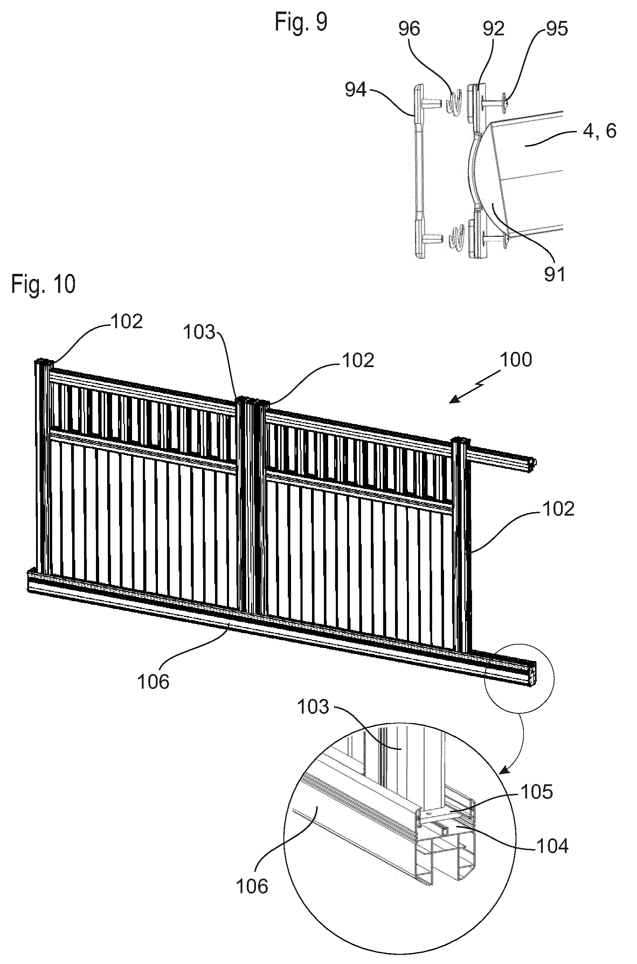

Selon une deuxième variante de réalisation représentée sur la figure 9, l'organe d'ancrage 9 comporte en outre une contre-pièce 94 et au moins un élément de serrage 95 apte à coopérer avec l'un des orifices 926 de la platine 92 pour maintenir à une distance réglable de cette dernière ladite contre-pièce 94. Cet élément de serrage 95 est avantageusement une vis et coopère avec un taraudage (non représenté) de la contre-pièce 94 pour maintenir cette dernière dans une position plus ou moins rapprochée de la platine 92. Pour renforcer le maintien en position de la contre-pièce 94, l'organe d'ancrage 9 comporte avantageusement un ressort 96 hélicoïdal disposé entre la contre-pièce 94 et la platine 92. Ce ressort 96 est de préférence disposé autour de l'élément de serrage 95.

Selon cette deuxième variante de réalisation, l'organe d'ancrage 9 comporte deux éléments de serrage 95 coopérant chacun avec l'un des deux orifices 926 de la platine 92 et étant chacun associé avec un ressort 96.

Cette deuxième variante de réalisation est intéressante car elle permet de ne pas réaliser d'organes de réception 25, 35 respectivement dans les premier et second montants 2, 3 pour fixer les traverses inférieure, intermédiaire et supérieure 4, 5, 6 et donc bloquer leur coulissement le long des premier et second montants 2, 3.En effet, pour engager l'un des organes d'ancrage 9 d'une des traverses inférieure, intermédiaire et supérieure 4, 5, 6 dans une des rainures interne 23, 33 des premier et second montants 2, 3, on rapproche la contre-pièce 94 de la platine 92, puis pour maintenir bloquer les traverses inférieure, intermédiaire et supérieure 4, 5, 6 le long des premier et second montants 2, 3, on écarte la contre-pièce 94 de la platine 92 à l'aide de l'élément 95. Ainsi, la contre-pièce 94 et la platine 92 prennent respectivement fermement appui sur des faces opposées de ladite rainure interne 23, 33 et immobilisent ainsi l'organe d'ancrage 9 et donc la traverse inférieure, intermédiaire ou supérieure 4, 5, 6 dans ladite rainure interne 23, 33.

Selon une troisième variante de réalisation représentée sur la figure 10, lorsque l'ossature en kit 100 est utilisée pour réaliser un vantail coulissant, chacun des premier et second montants 101, 102 pourra recevoir, à leur extrémité inférieure, un organe d'ancrage identique à l'organe d'ancrage 9 précédemment décrit, apte à coopérer au moins en partie avec une rainure interne 104 et une ouverture 105 d'un rail 106 de préférence sensiblement horizontal pour positionner et immobiliser lesdits premier et second montants 101, 102 sur ledit rail 106.

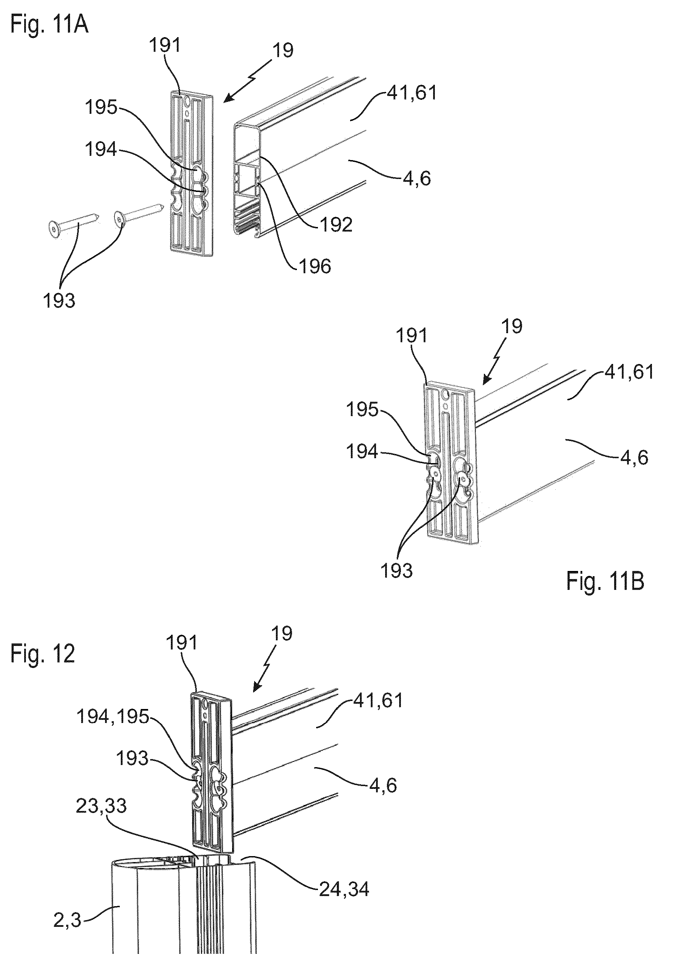

Enfin, selon une quatrième variante de réalisation, représentée sur les figures 11A, 11B et 12, l'organe d'ancrage 19 comporte une platine 191 agencée pour coopérer avec la face 192 d'une des extrémités d'une traverse inférieure ou supérieure 4, 6, et au moins un organe de blocage 193 agencé pour coopérer avec la platine 191 pour la fixer sur ladite face 192 d'une traverse inférieure ou supérieure 4, 6, ladite face 192 étant préalablement découpée, par exemple en biais, afin d'obtenir l'orientation angulaire souhaitée entre de ladite traverse inférieure ou supérieure 4, 6 et la platine 191. Ladite orientation angulaire détermine également l'orientation angulaire souhaitée entre de ladite traverse inférieure ou supérieure 4, 6 et l'élément avec lequel elle est liée.

La platine 191 est globalement en forme de parallélépipède aplati et comprend au moins un orifice 194 muni d'un lamage 195 à portée sphérique. De préférence, la platine comprend deux séries de trois ensembles orifice 194-lamage 195 disposés les uns à la suite des autres selon un axe parallèle à l'axe longitudinal de ladite platine 191, les deux séries étant parallèles entre elles.

Les dimensions de la platine 191 sont telles que :
- les hauteur et largeur hors-tout de la platine 191 sont supérieures aux dimensions de la section transversale des barres 41, 61,
- les largeur et épaisseur de la platine 191 sont inférieures aux dimensions de la section transversale de la rainure interne 23, 33 des premier et second montants 2, 3,
- la largeur de la platine 191 est supérieure à la largeur de celle de l'ouverture 24, 34 desdits premier et second montants 2, 3,

Ainsi, les platines 191 dépassent transversalement des barres 41, 61 et les extrémités des traverses inférieure et supérieure 4, 6 ont alors une double section longitudinale en forme générale de T.

L'organe d'ancrage 19 orientable comporte également au moins un organe de blocage 193 apte à coopérer avec un ensemble orifice 194-lamage 195 et un organe de réception 196 d'une des extrémités de la traverse inférieure ou supérieure 4, 6, pour immobiliser la platine 191 sur la face 192 dans une position choisie.

Les organes de blocage 193 et de réception 196 sont chacun de préférence au nombre de deux et sont respectivement de préférence une vis à portée sphérique et un taraudage. On comprend bien que l'organe de blocage 193 coopère avec le lamage 195 pour assurer un serrage efficace de la platine 191 sur la face 192, quelle que soit l'orientation angulaire.

Chaque organe de blocage 193 coopère avec un un ensemble orifice 194-lamage 195 d'une série pour permettre un réglage du positionnement de la platine 191 en fonction de l'orientation angulaire.

Enfin, selon une cinquième variante de réalisation non représentée, l'organe d'ancrage de l'ossature en kit selon l'invention comporte des surfaces concave et convexe respectives de la platine et de l'embout ont une forme de portion de cylindre de révolution et crantées.

### Possibilité d'application industrielle

On comprend bien que l'ossature en kit 1 selon l'invention peut avantageusement être utilisée pour tout réaliser un vantail de portail pivotant ou coulissant. Cette ossature pourra également être utilisée pour réaliser des éléments de barrière à fixer sur le sol ou le dessus d'un muret par exemple.

Enfin, il va de soi que l'exemple d'ossature en kit 1 conforme à l'invention qui vient d'être décrit n'est qu'une illustration particulière, en aucun cas limitative de l'invention.

## Revendications

1. Ossature en kit (1) pour réaliser un vantail fixe ou pivotant ou coulissant d'un portail ou analogue, ladite ossature en kit (1) comprenant au moins quatre éléments (2, 3, 4, 5, 6) reliés entre eux, au moins deux desdits au moins quatre éléments (2, 3, 4, 5, 6) comportant un organe d'ancrage (9,19) orientable à au moins une de leurs extrémités pour, lorsque ladite ossature en kit (1) est assemblée, d'une part, les positionner le long de l'axe longitudinal des éléments avec lesquels ils sont liés et les orienter angulairement par rapport aux éléments avec lesquels ils sont liés et, d'autre part, les immobiliser par rapport aux éléments avec lesquels ils sont liés à la position et selon l'orientation angulaire choisies.

2. Ossature en kit (1) selon la revendication 1, **caractérisée en ce que** l'organe d'ancrage (9) comprend un embout (91) solidaire d'au moins une des extrémités desdits éléments (2, 3, 4, 5, 6), une platine (92) apte à coopérer avec ledit embout (91) afin d'orienter angulairement ladite platine (92) par rapport audit embout (91), et au moins un organe de blocage (93) apte à coopérer avec l'embout (91) et la platine (92) pour immobiliser cette dernière sur ledit embout (91) dans une orientation choisie.

3. Ossature en kit (1) selon la revendication 2, **caractérisée en ce que** la platine (92) pivote par rapport audit embout (91) autour d'un axe sensiblement perpendiculaire à l'axe longitudinal respectifs desdits éléments (2, 3, 4, 5, 6) associés.

4. Ossature en kit (1) selon l'une quelconque des revendications 2 ou 3, **caractérisée en ce que** l'embout (91) comporte du coté opposé aux éléments (2, 3, 4, 5, 6) une surface convexe (911) de contact avec au moins une partie de la platine (92).

5. Ossature en kit (1) selon l'une quelconque des revendications 2 à 4, **caractérisée en ce que** la platine (92) est telle que les extrémités des éléments (2, 3, 4, 5, 6) recevant un organe d'ancrage (9) ont alors une double section longitudinale en forme générale de T.

6. Ossature en kit (1) selon l'une quelconque des revendications 4 ou 5, **caractérisée en ce que** la platine (92) comprend une partie médiane (921) et deux parties d'extrémité (922) disposées de part et d'autre de ladite partie médiane (921), ladite partie médiane (921) comporte une surface concave (923) apte à coopérer avec la surface convexe (911) de l'embout (91) et une surface convexe (924), chacune desdites surfaces étant déterminées par un rayon de courbure distinct.

7. Ossature en kit (1) selon la revendication 6, **caractérisée en ce que** les surfaces concave et convexe (923, 924) de la partie médiane (921) la surface convexe (911) de l'embout (91) ont une forme de portion de cylindre de révolution et ont le même rayon de courbure.

8. Ossature en kit (1) selon l'une quelconque des revendications 1 à 7, **caractérisée en ce que** lesdits quatre éléments (2, 3, 4, 6) sont un premier montant (2), un second montant (3), une traverse inférieure (4), et une traverse supérieure (6), **en ce que** les premiers et second montants (2, 3) comportent au moins une rainure interne (23, 33) débouchant longitudinalement aux extrémités des premiers et second montants (2, 3) et débouchant transversalement à l'extérieur desdits premier et second montants (2, 3) par une ouverture (24, 34) de largeur inférieure, lesdits premiers et second montants (2, 3) étant orientés de sorte que leur ouverture (24, 34) respective soit en vis-à-vis, et **en ce que** les extrémités desdites traverses inférieure et supérieure (4, 6) reçoivent chacune un organe d'ancrage (9) permettant l'insertion simultanée desdites extrémités dans la rainure interne (23, 33) et les ouvertures (24, 34), le coulissement sans jeu excessif desdites extrémités le long de l'axe longitudinal respectif des premier et second montants (2, 3) tout en bloquant le déplacement relatif desdites extrémités par rapport aux premier et second montants (2, 3) suivant deux directions perpendiculaires à l'axe longitudinal respectif des premier et second montants (2, 3).

9. Ossature en kit (1) selon la revendication 8, **caractérisée en ce que** les premier et second montants (2, 3) ont une section transversale en forme générale de C, chacune comportant respectivement une âme (21, 31) et deux ailes (22, 32), ces dernières formant respectivement et conjointement, d'une part, ladite rainure interne (23, 33) avec ladite âme (21, 31) et, d'autre part, ladite ouverture (24, 34).

10. Ossature en kit (1) selon l'une quelconque des revendications 8 ou 9, **caractérisée en ce que** les traverses inférieure et supérieure (4, 6) comportent respectivement une barre (41, 61) dont les extrémités sont apte à coopérer avec l'ouverture (24, 34) respective desdits premier et second montants (2, 3), chaque barre (41, 61) ayant une section transversale en forme générale de C et comportant respectivement une âme (42, 62) et deux ailes (43, 63), lesdites âme (42, 62) et ailes (43, 63) formant respectivement et conjointement un logement (44, 64) débouchant transversalement et aux extrémités à l'extérieur desdites barres (41, 61) et muni d'une butée (45, 65), lesdites traverses inférieure et supérieure (4, 6) étant orientées de sorte que les logements (44, 64) respectifs de leur barres (41, 61) soient en vis-à-vis.

11. Ossature en kit (1) selon l'une quelconque des revendications 8 à 10, **caractérisée en ce qu'**elle comporte au moins un élément réducteur (11) apte à être encliqueté dans les espaces libres des ouvertures (24, 34) desdits premiers et second montants (2, 3) et comprenant une gorge (111) dont la largeur est sensiblement identique à celle des logements (44, 64) respectifs des traverses inférieure et supérieure (4, 6).

12. Ossature en kit (1) selon la revendication 11, **caractérisée en ce qu'**elle comporte des premières lames de remplissage (7) jointives et/ou des deuxièmes lames de remplissage (8) non jointives aptes à venir s'insérer dans les logements (44, 64) respectifs des traverses inférieure et supérieure (4, 6) et/ou dans la gorge (111) de l'élément réducteur (11).

13. Ossature en kit (1) l'une quelconque des revendications 8 à 12, **caractérisée en ce qu'**elle comporte une traverse intermédiaire (5) similaire auxdites traverses inférieure et supérieure (4, 6), disposée entre ces dernières et comportant donc une barre (51) comprenant, sur chacune de ses extrémités longitudinales un organe d'ancrage.

14. Ossature en kit (1) selon la revendication 13, **caractérisée en ce que** les organes d'ancrage de la traverse intermédiaire (5) sont identiques aux organes d'ancrage (9) respectives des traverses inférieure et supérieure (4, 6).

15. Ossature en kit (1) selon l'une quelconque des revendications 13 ou 14, **caractérisée en ce que** la barre (51) a une section transversale en forme générale de H et comporte une âme (52) centrale et deux ailes (53) dépassant de part et d'autre de ladite âme (52), les deux ailes (53) formant conjointement un premier et un second logements (54, 55) longitudinaux disposés de part et d'autre de ladite âme (52) et débouchant transversalement et aux extrémités à l'extérieur traverse intermédiaire (5), lesdits premier et second logements (54, 55) étant muni d'une butée (56).

16. Ossature en kit (1) selon la revendication 15, **caractérisée en ce que** lesdits premier et second logements (54, 55) sont identiques aux logements (44, 64) respectifs desdites traverses inférieure et supérieure (4, 6).

17. Ossature en kit (1) selon la revendication 15 ou 16, **caractérisée en ce qu'**elle comporte au moins un élément espaceur (12) apte à être encliqueté dans les espaces libres dans les logements (44, 64) respectifs des traverses inférieure et supérieure (4, 6) ou dans les premier et deuxième logements (54, 55) de la traverse intermédiaire (5) ou dans la gorge (111) de l'élément réducteur (11).

18. Ossature en kit (1) selon la revendication 1, **caractérisée en ce que** l'organe d'ancrage (19) comporte une platine (191) agencée pour coopérer avec la face (192) d'une des extrémités desdits éléments (2, 3, 4, 5, 6), et au moins un organe de blocage (193) agencé pour coopérer avec la platine (191) et un organe de réception (196) d'une des extrémités desdits éléments (2, 3, 4, 5, 6) pour fixer ladite platine (191) sur ladite face (192), ladite face (192) étant préalablement découpée afin d'obtenir l'orientation angulaire souhaitée entre lesdits éléments (2, 3, 4, 5, 6) et la platine (191).

19. Ossature en kit (1) selon la revendication 18, **caractérisée en ce que** la platine (191) est telle que les extrémités des éléments (2, 3, 4, 5, 6) recevant un organe d'ancrage (19) ont alors une double section longitudinale en forme générale de T.

20. Ossature en kit (1) selon l'une quelconque des revendications 18 ou 19, **caractérisée en ce que** la platine (191) est globalement en forme de parallélépipède aplati et comprend au moins un orifice (194) muni d'un lamage (195) à portée sphérique.

21. Ossature en kit (1) selon l'une quelconque des revendications 18 à 20, **caractérisée en ce que** la platine (191) comprend deux séries d'une pluralité d'ensembles orifice (194)-lamage (195) disposés les uns à la suite des autres selon un axe parallèle à l'axe longitudinal de ladite platine (191), les deux séries étant parallèles entre elles.

22. Ossature en kit (1) selon l'une quelconque des revendications 18 à 22, **caractérisée en ce que** Les organes de blocage (193) et de réception (196) sont chacun de préférence au nombre de deux et sont respectivement de préférence une vis à portée sphérique et un taraudage.

## Patentansprüche

1. Bausatz für ein Rahmengerüst (1) zur Herstellung eines festen Flügels oder eines Schwenk- oder Schiebeflügels eines Portals oder ähnlichem, wobei der besagte Bausatz für ein Rahmengerüst (1) zumindest vier Elemente (2, 3, 4, 5, 6) umfasst, die miteinander verbunden sind, wobei zumindest zwei der besagten zumindest vier Elemente (2, 3, 4, 5, 6) ein Verankerungselement (9, 19) umfasst, das an zumindest einem ihrer Enden verstellbar ist, um sie, wenn der besagte Bausatz für ein Rahmengerüst (1) zusammengesetzt ist, einerseits entlang der Längsachse der Elemente zu positionieren, mit denen sie verbunden sind, und sie winklig im Verhältnis zu den Elementen auszurichten, mit denen sie verbunden sind, und um sie andererseits im Verhältnis zu den Elementen, mit denen sie verbunden sind, in der gewählten Position und Winkelausrichtung zu blockieren.

2. Bausatz für ein Rahmengerüst (1) nach Anspruch 1, **dadurch gekennzeichnet, dass** das Verankerungselement (9) ein Ansatzstück (91) umfasst, das fest mit zumindest einem der Enden der besagten Elemente (2, 3, 4, 5, 6) verbunden ist, eine Platine (92), die in der Lage ist, mit dem besagten Ansatzstück (91) zusammenzuwirken, um die besagte Platine (92) im Verhältnis zum besagten Ansatzstück (91) winklig auszurichten, und zumindest ein Verriegelungselement (93), das in der Lage ist, mit dem Ansatzstück (91) und der Platine (92) zusammenzuwirken, um letztere auf dem besagten Ansatzstück (91) in einer ausgewählten Ausrichtung zu blockieren.

3. Bausatz für ein Rahmengerüst (1) nach Anspruch 2, **dadurch gekennzeichnet, dass** die Platine (92) im Verhältnis zum besagten Ansatzstück (91) um eine Achse schwenkt, die in etwa senkrecht zur jeweiligen Längsachse der besagten zugehörigen Elemente (2, 3, 4, 5, 6) verläuft.

4. Bausatz für ein Rahmengerüst (1) nach irgendeinem der Ansprüche 2 oder 3, **dadurch gekennzeichnet, dass** das Ansatzstück (91) auf der zu den Elementen (2, 3, 4, 5, 6) gegenüber liegenden Seite eine konvexe Kontaktfläche (911) mit zumindest einem Teil der Platine (92) umfasst.

5. Bausatz für ein Rahmengerüst (1) nach irgendeinem der Ansprüche 2 bis 4, **dadurch gekennzeichnet, dass** die Platine (92) derart ausgeführt ist, dass die Enden der Elemente (2, 3, 4, 5, 6), die ein Verankerungselement (9) aufnehmen, somit einen doppelten Längsschnitt in der allgemeinen Form eines T aufweisen.

6. Bausatz für ein Rahmengerüst (1) nach irgendeinem der Ansprüche 4 oder 5, **dadurch gekennzeichnet, dass** die Platine (92) einen mittleren Abschnitt (921) und zwei Endabschnitte (922) umfasst, die beiderseits des besagten mittleren Abschnitts (921) angeordnet sind, wobei der besagte mittlere Abschnitt (921) eine konkave Fläche (923) umfasst, die in der Lage ist, mit der konvexen Fläche (911) des Ansatzstücks (91) und einer konvexe Fläche (924) zusammenzuwirken, wobei jede der besagten Flächen durch einen unterschiedlichen Krümmungsradius bestimmt werden.

7. Bausatz für ein Rahmengerüst (1) nach Anspruch 6, **dadurch gekennzeichnet, dass** die konkaven und konvexen (923, 924) Flächen des mittleren Abschnitts (921) und die konvexe Fläche (911) des Ansatzstücks (91) eine Form eines Teils eines Drehzylinders aufweisen und denselben Krümmungsradius haben.

8. Bausatz für ein Rahmengerüst (1) nach irgendeinem der Ansprüche 1 bis 7, **dadurch gekennzeichnet, dass** die besagten vier Elemente (2, 3, 4, 5, 6) eine erste Stütze (2), eine zweite Stütze (3), eine untere Traverse (4) und eine obere Traverse (6) sind, dadurch, dass die erste und die zweite Stütze (2, 3) zumindest eine innere Einkerbung (23, 33) umfassen, die in Längsrichtung in die Enden der ersten und der zweiten Stütze (2, 3) münden, und die in Querrichtung außerhalb der besagten ersten und zweiten Stütze (2, 3) durch eine Öffnung (24, 34) mit einer geringeren Breite münden, wobei die besagte erste und zweite Stütze (2, 3) derart ausgerichtet sind, dass sich ihre jeweilige Öffnung (24, 34) gegenüber der anderen befindet, und dadurch, dass die Enden der besagten unteren und oberen Traverse (4, 6) jeweils ein Verankerungselement (9) aufnehmen, wodurch die gleichzeitige Einführung der besagten Enden in die innere Einkerbung (23, 33) und die Öffnungen (24, 34) möglich wird, und das Gleiten der besagten Enden ohne übermäßiges Spiel entlang der jeweiligen Längsachse der ersten und der zweiten Stütze (2, 3), bei gleichzeitigem Verriegeln der jeweiligen Bewegung der besagten Enden im Verhältnis zur ersten und der zweiten Stütze (2, 3) in die beiden Richtungen senkrecht zur jeweiligen Längsachse der ersten und der zweiten Stütze (2, 3).

9. Bausatz für ein Rahmengerüst (1) nach Anspruch 8, **dadurch gekennzeichnet, dass** die erste und die zweite Stütze (2, 3) einen Querschnitt in einer allgemeinen Form eines C haben, und jede jeweils einen Steg (21, 31) und zwei Flügel (22, 32) umfassen, wobei diese letzteren jeweils und gemeinsam einerseits die besagte innere Einkerbung (23, 33) mit dem besagten Steg (21, 31) und andererseits die besagte Öffnung (24, 34) bilden.

10. Bausatz für ein Rahmengerüst (1) nach irgendeinem der Ansprüche 8 oder 9, **dadurch gekennzeichnet, dass** die untere und die obere Traverse (4, 6) jeweils einen Balken (41, 61) umfassen, dessen Enden in der Lage sind, mit der jeweiligen Öffnung (24, 34) der besagten ersten und der zweiten Stütze (2, 3) zusammenzuwirken, wobei jeder Balken (41, 61) einen Querschnitt in einer allgemeinen Form eines C aufweist und jeweils einen Steg (42, 62) und zwei Flügel (43, 63) umfasst, wobei der besagte Steg (42, 62) und die Flügel (43, 63) jeweils und gemeinsam eine Aufnahme (44, 64) bilden, die in Querrichtung und an den Enden außen in die besagten Balken (41, 61) münden und mit einem Anschlag (45, 65) versehen ist, wobei die besagte untere und die obere Traverse (4, 6) derart ausgerichtet sind, dass die jeweiligen Aufnahmen (44, 64) ihrer Balken (41, 61) einander gegenüber liegen.

11. Bausatz für ein Rahmengerüst (1) nach irgendeinem der Ansprüche 8 bis 10, **dadurch gekennzeichnet, dass** er zumindest ein Verkleinerungselement (11) umfasst, das in der Lage ist, in die freien Räume der Öffnungen (24, 34) der besagten ersten und die zweiten Stütze (2, 3) einzurasten, und eine Rille (111) umfassend, deren Breite in etwa gleich jener der jeweiligen Aufnahmen (44, 64) der unteren und die oberen Traverse (4, 6) ist.

12. Bausatz für ein Rahmengerüst (1) nach Anspruch 11, **dadurch gekennzeichnet, dass** er erste fugendichte Fülllamellen (7) und/ oder zweite nicht fugendichte Fülllamellen (8) umfasst, die in der Lage sind, sich in die jeweiligen Aufnahmen (44, 64) der unteren und oberen Traverse (4, 6) und/ oder in die Rille (111) des Verkleinerungselements (11) einzufügen.

13. Bausatz für ein Rahmengerüst (1) nach irgendeinem der Ansprüche 8 bis 12, **dadurch gekennzeichnet, dass** er eine Zwischentraverse (5) ähnlich der besagten unteren und oberen Traverse (4, 6) umfasst, die zwischen letzteren angeordnet ist, und somit einen Balken (51) umfasst, der an jedem seiner Längsenden ein Verankerungselement umfasst.

14. Bausatz für ein Rahmengerüst (1) nach Anspruch 13, **dadurch gekennzeichnet, dass** die Verankerungselemente der Zwischentraverse (5) gleich den jeweiligen Verankerungselementen (9) der unteren und der oberen Traverse (4, 6) sind.

15. Bausatz für ein Rahmengerüst (1) nach irgendeinem der Ansprüche 13 oder 14, **dadurch gekennzeichnet, dass** der Balken (51) einen Querschnitt in einer allgemeinen Form eines H aufweist und einen mittleren Steg (52) und zwei Flügel (53) umfasst, die beiderseits des besagten Stegs (52) überstehen, wobei die beiden Flügel (53) gemeinsam eine erste und eine zweite längliche Aufnahme (54, 55) bilden, die beiderseits des besagten Stegs (52) angeordnet sind, und quer und an den Enden außen in die Zwischentraverse (5) münden, wobei die besagte erste und zweite Aufnahme (54, 55) mit einem Anschlag (56) versehen ist.

16. Bausatz für ein Rahmengerüst (1) nach Anspruch 15, **dadurch gekennzeichnet, dass** die besagte erste und zweite Aufnahme (54, 55) gleich den jeweiligen Aufnahmen (44, 64) der besagten unteren und der oberen Traverse (4, 6) sind.

17. Bausatz für ein Rahmengerüst (1) nach Anspruch 15 oder 16, **dadurch gekennzeichnet, dass** er zumindest ein Abstandhalterelement (12) umfasst, das in der Lage ist, in die freien Räume in den jeweiligen Aufnahmen (44, 64) der unteren und der oberen Traverse (4, 6) oder in der ersten und zweiten Aufnahme (54, 55) der Zwischentraverse (5) oder in der Rille (111) des Verkleinerungselements (11) einzurasten.

18. Bausatz für ein Rahmengerüst (1) nach Anspruch 1, **dadurch gekennzeichnet, dass** das Verankerungselement (19) eine Platine (191) umfasst, die angeordnet ist, um mit der Seite (192) eines der Enden der besagten Elemente (2, 3, 4, 5, 6) zusammenzuwirken, und zumindest ein Verriegelungselement (193), das angeordnet ist, um mit der Platine (191) und einem Aufnahmeelement (196) eines der Enden der besagten Elemente (2, 3, 4, 5, 6) zusammenzuwirken, um die besagte Platine (191) auf der besagten Seite (192) zu befestigen, wobei die besagte Seite (192) zuvor ausgeschnitten wird, um die gewünschte Winkelausrichtung zwischen den besagten Elementen (2, 3, 4, 5, 6) und der Platine (191) zu erhalten.

19. Bausatz für ein Rahmengerüst (1) nach Anspruch 18, **dadurch gekennzeichnet, dass** die Platine (191) derart ausgeführt ist, dass die Enden der Elemente (2, 3, 4, 5, 6), die ein Verankerungselement (19) aufnehmen, einen doppelten Längsschnitt in einer allgemeinen Form eines T aufweisen.

20. Bausatz für ein Rahmengerüst (1) nach irgendeinem der Ansprüche 18 oder 19, **dadurch gekennzeichnet, dass** die Platine (191) im Allgemeinen eine Form eines flachen Quaders aufweist und zumindest eine Bohrung (194) aufweist, die mit einer Senkung (195) mit einem kugelförmigen Sitz ausgestattet ist.

21. Bausatz für ein Rahmengerüst (1) nach irgendeinem der Ansprüche 18 bis 20, **dadurch gekennzeichnet, dass** die Platine (191) zwei Reihen mit einer Vielzahl von Einheiten von Bohrungen (194)-Senkungen (195) umfasst, die nacheinander auf einer Achse angeordnet sind, die parallel zur Längsachse der besagten Platine (191) verläuft, wobei die beiden Reihen parallel zueinander verlaufen.

22. Bausatz für ein Rahmengerüst (1) nach irgendeinem der Ansprüche 18 bis 22, **dadurch gekennzeichnet, dass** die Verriegelungselemente (193) und die Aufnahmeelemente (196) jeweils vorzugsweise paarweise auftreten und jeweils vorzugsweise eine Schraube mit kugelförmigem Sitz und eine Gewindebohrung sind.

## Claims

1. Frame in the form of a kit (1) for achieving a fixed or hinged or sliding leaf for a gate or similar, said frame in the form of a kit (1) comprising at least four elements (2, 3, 4, 5, 6) interconnected, with at least two of said at least four elements (2, 3, 4, 5, 6) comprising an anchoring member (9, 19) orientable at at least one of their ends to, when said frame in the form of a kit (1) is assembled, on the one hand, position them along the longitudinal axis of the elements with which they are attached and orient them angularly relative to the elements with which they are attached and, on the other hand, immobilise them relative to the elements with which they are attached at the position and according to the angular orientation chosen.

2. Frame in the form of a kit (1) according to claim 1, **characterised in that** the anchoring member (9) comprises a nozzle (91) integral with at least one of the ends of said elements (2, 3, 4, 5, 6), a plate (92) able to cooperate with said nozzle (91) so as to angularly orientate said plate (92) relative to said nozzle (91), and at least one locking member (93) able to cooperate with the nozzle (91) and the plate (92) in order to immobilise the latter on said nozzle (91) in a chosen orientation.

3. Frame in the form of a kit (1) according to claim 2, **characterised in that** the plate (92) pivots relative to said nozzle (91) about an axis substantially perpendicular to the longitudinal axis that are respective to said associated elements (2, 3, 4, 5, 6).

4. Frame in the form of a kit (1) according to any of claims 2 or 3, **characterised in that** the nozzle (91) comprises on the side opposite the elements (2, 3, 4, 5, 6) a convex surface (911) for contact with at least a portion of the plate (92).

5. Frame in the form of a kit (1) according to any of claims 2 to 4, **characterised in that** the plate (92) is such that the ends of the elements (2, 3, 4, 5, 6) receiving an anchoring member (9) then have a double longitudinal section in the general shape of a T.

6. Frame in the form of a kit (1) according to any of claims 4 or 5, **characterised in that** the plate (92) comprises a median portion (921) and two end portions (922) arranged on either side of said median portion (921), said median portion (921) comprises a concave surface (923) able to cooperate with the convex surface (911) of the nozzle (91) and a convex surface (924), with each one of said surfaces being determined by a separate radius of curvature.

7. Frame in the form of a kit (1) according to claim 6, **characterised in that** the concave and convex surfaces (923, 924) of the median portion (921) and the convex surface (911) of the nozzle (91) have a shape of a portion of a cylinder of revolution and have the same radius of curvature.

8. Frame in the form of a kit (1) according to any of claims 1 to 7, **characterised in that** said four elements (2, 3, 4, 6) are a first riser (2), a second riser (3), a lower cross-piece (4), and an upper cross-piece (6), **in that** the first and second risers (2, 3) comprising at least one internal groove (23, 33) opening longitudinally at the ends of the first and second risers (2, 3) and opening transversally outside of said first and second risers (2, 3) via an opening (24, 34) of smaller width, said first and second risers (2, 3) being oriented in such a way that their respective opening (24, 34) is facing, and **in that** the ends of said lower and upper cross-pieces (4, 6) each receive an anchoring member (9) allowing for the simultaneous insertion of said ends into the internal groove (23, 33) and the openings (24, 34), the sliding without excessive play of said ends along the respective longitudinal axis of the first and second risers (2, 3) while blocking the relative displacement of said ends relative to the first and second risers (2, 3) according to two directions perpendicular to the respective longitudinal axis of the first and second risers (2, 3).

9. Frame in the form of a kit (1) according to claim 8, **characterised in that** the first and second risers (2, 3) have a transversal section in the general shape of a C, with each one respectively comprising a shaft (21, 31) and two wings (22, 32), with the latter respectively and jointly forming, on the one hand, said internal groove (23, 33) with said shaft (21, 31) and, on the other hand, said opening (24, 34).

10. Frame in the form of a kit (1) according to any of claims 8 or 9, **characterised in that** the lower and upper cross-pieces (4, 6) respectively comprise a bar (41, 61) of which the ends are able to cooperate with the respective opening (24, 34) of said first and second risers (2, 3), each bar (41, 61) having a transversal section in the general shape of a C and respectively comprising a shaft (42, 62) and two wings (43, 63), said shaft (42, 62) and wings (43, 63) respectively and jointly forming a housing (44, 64) opening transversally and at the ends outside of said bars (41, 61) and provided with an abutment (45, 65), said lower and upper cross-pieces (4, 6) being oriented in such a way that the respective housings (44, 64) of their bars (41, 61) are facing.

11. Frame in the form of a kit (1) according to any of claims 8 to 10, **characterised in that** it comprises at least one reducing element (11), able to be snap fit into the free spaces of the openings (24, 34) of said first and second risers (2, 3) and comprising a groove (111) of which the width is substantially identical to that of the respective housings (44, 64) of the lower and upper cross-pieces (4, 6).

12. Frame in the form of a kit (1) according to claim 11, **characterised in that** it comprises first adjoining filling blades (7) and/or second non-adjoining filling blades (8) able to be inserted into the respective housings (44, 64) of the lower and upper cross-pieces (4, 6) and/or into the groove (111) of the reducing element (11).

13. Frame in the form of a kit (1) according to any of claims 8 to 12, **characterised in that** it comprises an intermediate cross-piece (5) similar to said lower and upper cross-pieces (4, 6), arranged between the latter and therefore comprising a bar (51) including, on each one of its longitudinal ends an anchoring member.

14. Frame in the form of a kit (1) according to claim 13, **characterised in that** the anchoring members of the intermediate cross-piece (5) are identical to the respective anchoring members (9) of the lower and upper cross-pieces (4, 6).

15. Frame in the form of a kit (1) according to any of claims 13 or 14, **characterised in that** the bar (51) has a transversal section in the general shape of an H and comprises a central shaft (52) and two wings (53) exceeding on either side of said shaft (52), with the two wings (53) jointly forming a first and a second longitudinal housing (54, 55) arranged on either side of said shaft (52) and opening transversally and at the ends outside of the intermediate cross-piece (5), said first and second housings (54, 55) being provided with an abutment (56).

16. Frame in the form of a kit (1) according to claim 15, **characterised in that** said first and second housings (54, 55) are identical to the respective housings (44, 64) of said lower and upper cross-pieces (4, 6).

17. Frame in the form of a kit (1) according to claim 15 or 16, **characterised in that** it comprises at least one spacing element (12) able to be snap fit into the free spaces in the respective housings (44, 64) of the lower and upper cross-pieces (4, 6) or in the first and second housings (54, 55) of the intermediate cross-piece (5) or in the groove (111) of the reducing element (11).

18. Frame in the form of a kit (1) according to claim 1, **characterised in that** the anchoring member (19) comprises a plate (191) arranged to cooperate with the face (192) of one of the ends of said elements (2, 3, 4, 5, 6), and at least one locking member (193) arranged to cooperate with the plate (191) and a member for receiving (196) one of the ends of said elements (2, 3, 4, 5, 6) in order to fasten said plate (191) on said face (192), said face (192) being cut beforehand in order to obtain the desired angular orientation between said elements (2, 3, 4, 5, 6) and the plate (191).

19. Frame in the form of a kit (1) according to claim 18, **characterised in that** the plate (191) is such that the ends of the elements (2, 3, 4, 5, 6) that receive an anchoring member (19) then have a double longitudinal section in the general shape of a T.

20. Frame in the form of a kit (1) according to any of claims 18 or 19, **characterised in that** the plate (191) generally has a flattened parallelepiped shape and comprises at least one orifice (194) provided with a counterbore (195) with a spherical bearing surface.

21. Frame in the form of a kit (1) according to any of claims 18 to 20, **characterised in that** the plate (191) comprises two series of a plurality of orifice (194)-counterbore (195) units arranged one after the other according to an axis parallel to the longitudinal axis of said plate (191), with the two series being parallel to each other.

22. Frame in the form of a kit (1) according to any of claims 18 to 22, **characterised in that** the locking (193) and receiving (196) members are each preferably in the number of two and are respectively preferably a screw with a spherical bearing surface and a threading.
